# EUROPEAN PATENT APPLICATION

(11) **EP 4 810 448 A1**
(43) Date of publication of application: **23.09.2026**
(21) Application number: 24891106.7
(22) Date of filing: 01.10.2024
(51) Int. Cl.: C02F 1/461, C02F 1/469

(54) **WATER TREATMENT DEVICE**

(30) Priority: 17.11.2023 JP 2023195801
(71) Applicant: Panasonic Housing Solutions Co., Ltd., Kadoma-shi, Osaka 571-8686 (JP)
(72) Inventor: NISHIYAMA, Hiroko, Kadoma-shi, Osaka 571-0057 (JP); MAEDA, Yasunari, Kadoma-shi, Osaka 571-0057 (JP)
(74) Representative: Müller-Boré & Partner Patentanwälte PartG mbB
(86) International application number: PCT/JP2024/035075
(87) International publication number: WO 2025/105064

(57) **Abstract**

A water treatment device (1) for producing treated water by removing metal ions from water to be treated is provided. The water treatment device includes an electrolytic cell (10) that includes an anode chamber (15) provided with an anode (12), a cathode chamber (16) provided with a cathode (13), and an ion-permeable membrane (14) that partitions the anode chamber and the cathode chamber and allows ions to pass therethrough, and that is configured to generate acidic water and alkaline water from the water to be treated by electrolysis; a first conductivity measurement unit (70) that measures a conductivity of water flowing through the anode chamber; a second conductivity measurement unit (80) that measures a conductivity of water flowing through the cathode chamber; and a control unit (100) that controls a voltage or current between the anode and the cathode. The acidic water flows through the anode chamber, the alkaline water flows through the cathode chamber, and the control unit varies a voltage or current applied between the anode and the cathode based on the conductivity of water measured by the first conductivity measurement unit and the conductivity of water measured by the second conductivity measurement unit.

## Description

### TECHNICAL FIELD

The present disclosure relates to a water treatment device.

### BACKGROUND ART

Conventionally, ion exchange resin water softeners for removing metal ions from hard water have been known (see Patent Literature 1).

The ion exchange resin water softener in Patent Literature 1 removes metal ions (calcium ions and magnesium ions) from hard water by means of an ion exchange resin. Specifically, by sending hard water through a water softener vessel provided with an ion exchange resin having sodium ions attached to its surface, the metal ions in the hard water are replaced with sodium ions, thereby removing the metal ions from the hard water. The metal ions that had been present in the hard water are captured on the surface of the ion exchange resin. In this manner, the hardness of the hard water is reduced to produce soft water.

### CITATION LIST

### PATENT LITERATURE

Patent Literature 1: Japanese Unexamined Patent Application Publication No. 2000-140840

### SUMMARY OF INVENTION

However, the ion exchange resin water softener in Patent Literature 1 has a problem in that a large amount of salt water is required when regenerating the ion exchange resin that has captured metal ions, which results in burdensome maintenance. In addition, when regeneration processing is performed, regeneration effluent containing a large amount of salt water is generated, which poses the problem of increased loads on soil contamination and sewage treatment. Furthermore, treated water softened by the ion exchange resin water softener has a high concentration of sodium ions, and may not be recommended as drinking water in certain regions. As described above, water treatment devices using ion exchange resins have had room for improvement from the perspectives of maintainability and environmental performance.

The present disclosure has been made in view of such problems with the prior art. An object of the present disclosure is to provide a water treatment device capable of efficiently removing metal ions from hard water without using an ion exchange resin.

In order to solve the problem above, a water treatment device according to an aspect of the present disclosure is a water treatment device for producing treated water by removing metal ions from water to be treated. The water treatment device includes: an electrolytic cell that includes an anode chamber provided with an anode, a cathode chamber provided with a cathode, and an ion-permeable membrane that partitions the anode chamber and the cathode chamber and allows ions to pass therethrough, and that is configured to generate acidic water and alkaline water from the water to be treated by electrolysis; a first conductivity measurement unit that measures a conductivity of water flowing through the anode chamber; a second conductivity measurement unit that measures a conductivity of water flowing through the cathode chamber; and a control unit that controls a voltage or current between the anode and the cathode. The acidic water flows through the anode chamber, and the alkaline water flows through the cathode chamber. The control unit varies a voltage or current applied between the anode and the cathode based on the conductivity of water measured by the first conductivity measurement unit and the conductivity of water measured by the second conductivity measurement unit.

### BRIEF DESCRIPTION OF DRAWINGS

[Fig. 1] Fig. 1 is a schematic view illustrating a configuration example of a water treatment device according to the present embodiment.
[Fig. 2] Fig. 2 is a schematic view illustrating migration and insolubilization states of metal ions in an electrolytic cell of the water treatment device according to the present embodiment.
[Fig. 3] Fig. 3 is a schematic view illustrating migration and neutralization states of hydrogen ions in the electrolytic cell of the water treatment device according to the present embodiment.
[Fig. 4] Fig. 4 is a graph illustrating a relationship between pH and abundance ratios of carbonic acid (H₂CO₃), bicarbonate ions (HCO₃⁻), and carbonate ions (CO₃²⁻) when carbonate ions are dissolved in water.
[Fig. 5] Fig. 5 is a table for explaining electrolytic control in the water treatment device according to the present embodiment.
[Fig. 6] Fig. 6 is a graph illustrating an example of changes in conductivity of water flowing through the anode chamber during electrolytic control.
[Fig. 7] Fig. 7 is a graph schematically illustrating a relationship between conductivity of the water to be treated and ion migration rate of metal ions, insolubilization rate of metal ions, and water softening rate, in a case where only constant-current control is performed, in a case where only constant-voltage control is performed, and in the case where electrolytic control is performed.
[Fig. 8] Fig. 8 is a graph illustrating an example of a relationship between conductivity of water to be treated and power consumption when only constant-voltage control, when only constant-current control, and when electrolytic control are performed.

### DESCRIPTION OF EMBODIMENTS

Hereinafter, a water treatment device according to the present embodiment will be described in detail with reference to the drawings. Note that the dimensional ratios in the drawings are exaggerated for explanatory convenience and may differ from actual ratios.

The water treatment device according to the present embodiment is a device for producing treated water by removing and separating the metal ions from water to be treated to reduce the concentration (hardness) of metal ions in the water to be treated to a predetermined concentration or lower. The metal ions include calcium ions (Ca²⁺) and magnesium ions (Mg²⁺). Note that, regarding definitions of hard water and soft water, for example, the WHO definition may be used; that is, water with a hardness of less than 120 mg/L may be defined as soft water, and water with a hardness of 120 mg/L or more may be defined as hard water.

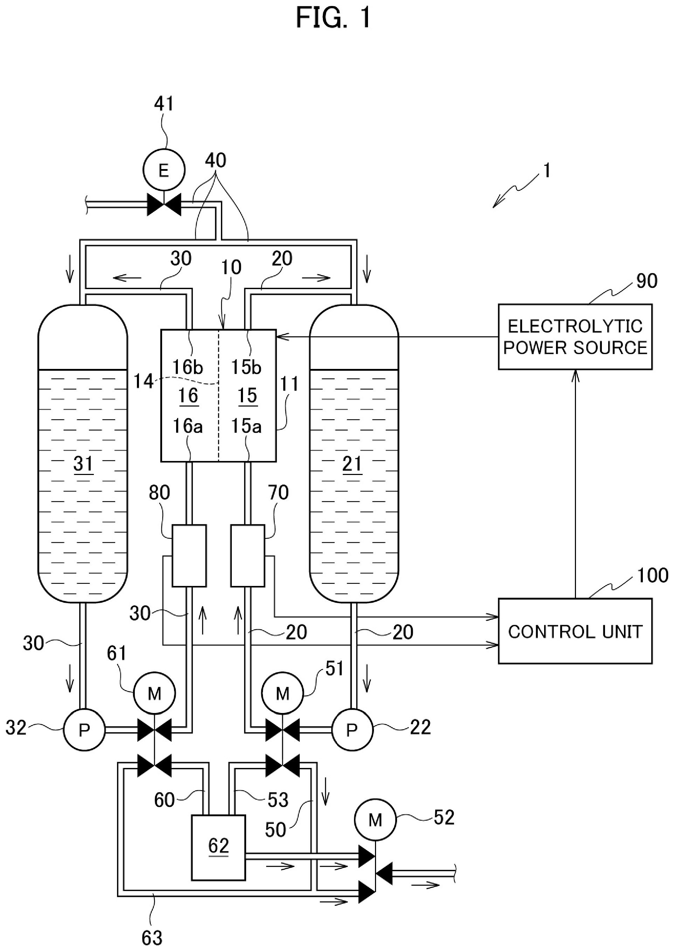

As illustrated in Fig. 1, a water treatment device 1 according to the present embodiment includes an electrolytic cell 10 that generates acidic water and alkaline water from water to be treated by electrolysis, a first flow path 20 through which acidic water circulates, and a second flow path 30 through which alkaline water circulates. The water treatment device 1 further includes a water-to-be-treated flow path 40 that supplies water to be treated, a first outflow flow path 50 through which the treated acidic water flows out from the first flow path 20, and a second outflow flow path 60 through which the treated alkaline water flows out from the second flow path 30.

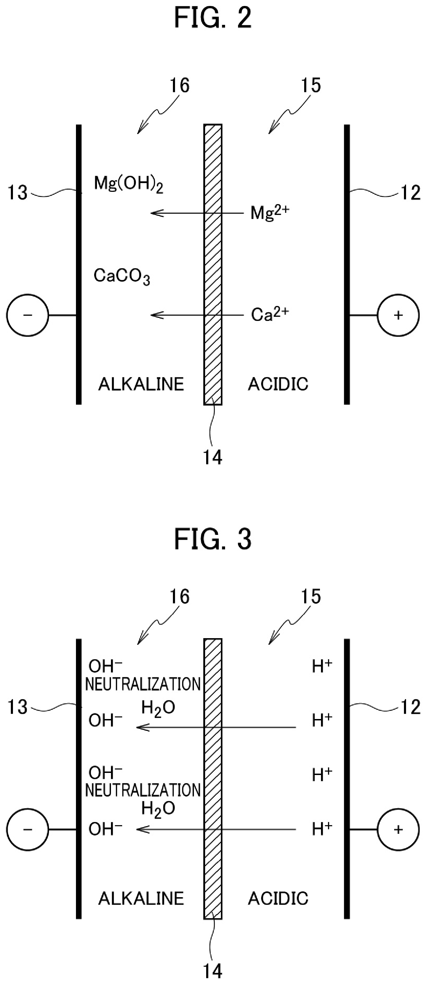

As illustrated in FIGS. 1 and 2, the electrolytic cell 10 includes a solution tank 11, an anode 12, a cathode 13, and an ion-permeable membrane 14 that allows ions to pass therethrough. The solution tank 11 is a vessel that holds water to be treated containing metal ions, and electrolyzes the water to be treated held therein, as described below.

The anode 12 and the cathode 13 are an electrode pair for electrolyzing the water to be treated in the solution tank 11. The anode 12 is provided in an anode chamber 15, and the cathode 13 is provided in a cathode chamber 16. The anode 12 and the cathode 13 are arranged inside the solution tank 11 facing each other with the ion-permeable membrane 14 interposed therebetween. The anode 12 is electrically connected to the positive electrode of an electrolytic power source 90, and the cathode 13 is electrically connected to the negative electrode of the electrolytic power source 90.

The ion-permeable membrane 14 is arranged inside the solution tank 11, and partitions the solution tank 11 into the anode chamber 15 and the cathode chamber 16. That is, the anode chamber 15 is defined by a portion of the solution tank 11 and the ion-permeable membrane 14, and the cathode chamber 16 is defined by another portion of the solution tank 11 and the ion-permeable membrane 14. The ion-permeable membrane 14 is a member through which metal ions in the water to be treated can pass. Therefore, the ion-permeable membrane 14 is not particularly limited as long as metal ions can pass therethrough, and for example, a porous membrane or a cation exchange membrane can be used. The material of the porous membrane can be, for example, a ceramic material, a resin material, or a metal material, but is not particularly limited.

The first flow path 20 is connected to the anode chamber 15 of the electrolytic cell 10. That is, the first flow path 20 is connected to each of an inlet 15a and an outlet 15b of the anode chamber 15. In the first flow path 20, on the downstream side of the anode chamber 15, an acidic water tank 21 for temporarily storing acidic water, and a first circulation pump 22 for pressure-feeding acidic water, are arranged. Therefore, the acidic water that has flowed out from the outlet 15b of the anode chamber 15 can pass through the acidic water tank 21 and the first circulation pump 22 and flow into the interior of the anode chamber 15 from the inlet 15a of the anode chamber 15.

Similarly, the second flow path 30 is connected to the cathode chamber 16 of the electrolytic cell 10. That is, the second flow path 30 is connected to each of an inlet 16a and an outlet 16b of the cathode chamber 16. In the second flow path 30, on the downstream side of the cathode chamber 16, an alkaline water tank 31 for temporarily storing alkaline water, and a second circulation pump 32 for pressure-feeding alkaline water, are arranged. Therefore, the alkaline water that has flowed out from the outlet 16b of the cathode chamber 16 can pass through the alkaline water tank 31 and the second circulation pump 32, and flow into the interior of the cathode chamber 16 from the inlet 16a of the cathode chamber 16.

The water-to-be-treated flow path 40 is a flow path that supplies water to be treated to the electrolytic cell 10. Specifically, the water-to-be-treated flow path 40 branches into two flow paths, and is connected to the first flow path 20 and the second flow path 30. Therefore, the water to be treated is supplied to both the first flow path 20 and the second flow path 30 through the water-to-be-treated flow path 40. Note that the water-to-be-treated flow path 40 is provided with an electromagnetic valve 41 that switches between water flow and water shutoff of the water to be treated.

The first outflow flow path 50 is connected to the downstream side of the first circulation pump 22 via a first electromagnetic valve 51. The first outflow flow path 50 is a flow path through which acidic water that has been subjected to the water-softening treatment in the electrolytic cell 10 flows out, as described below. Note that a water faucet 52 that switches between water flow and water shutoff of the acidic water that has been subjected to the water-softening treatment is provided at the terminal end of the first outflow flow path 50. Treated water that has flowed out from the first outflow flow path 50 is treated water from which metal ions have been removed or reduced, and can be suitably used.

The second outflow flow path 60 is connected to the downstream side of the second circulation pump 32 via a second electromagnetic valve 61. The second outflow flow path 60 is a flow path through which alkaline water that has been subjected to the insolubilization treatment in the electrolytic cell 10 flows out, as described below. Note that the terminal end of the second outflow flow path 60 is connected to the water faucet 52. The water faucet 52 can switch between water flow and water shutoff of the alkaline water that has been subjected to the water-softening treatment by removing insoluble matter through a filter 62. Treated water that has flowed out from the second outflow flow path 60 is water from which metal ions have been removed or reduced, and can be suitably used.

The second outflow flow path 60 is provided with the filter 62 for separating and removing insoluble matter formed from metal ions insolubilized in the electrolytic cell 10. The filter 62 is not particularly limited as long as it can remove insoluble matter, and for example, a cartridge-type filter, a filtration layer using granular filter media, a cyclone-type solid-liquid separator, a hollow fiber membrane, or the like can be used.

Note that, as illustrated in Fig. 1, a bypass flow path 53 for sending the acidic water that has been subjected to the water-softening treatment to the filter 62 may be connected to the first electromagnetic valve 51. Insoluble matter is sufficiently reduced in the acidic water that has been subjected to the water-softening treatment in the electrolytic cell 10 and is circulating through the first flow path 20, but if necessary, the acidic water may be filtered through the filter 62 and then sent to the water faucet 52. Furthermore, a bypass flow path 63 for directly sending, without passing through the filter 62, the alkaline water that has been subjected to the insolubilization treatment in the electrolytic cell 10 to the water faucet 52 may be connected to the second electromagnetic valve 61.

As illustrated in Fig. 1, the water treatment device 1 according to the present embodiment includes a first conductivity measurement unit 70 that measures the conductivity of water flowing through the anode chamber, and a second conductivity measurement unit 80 that measures the conductivity of water flowing through the cathode chamber. Note that, in the present specification, water flowing through the anode chamber is also referred to as anodic water, and water flowing through the cathode chamber is also referred to as cathodic water. The first conductivity measurement unit 70 is provided on the inlet 15a side of the anode chamber 15 in the first flow path 20, and the second conductivity measurement unit 80 is provided on the inlet 16a side of the cathode chamber 16 in the second flow path 30. However, the installation location of the first conductivity measurement unit 70 is not particularly limited as long as the conductivity of the anodic water can be measured; for example, the first conductivity measurement unit 70 may be provided inside the anode chamber 15 or inside the acidic water tank 21. Similarly, the installation location of the second conductivity measurement unit 80 is not particularly limited as long as the conductivity of the cathodic water can be measured; for example, second conductivity measurement unit 80 may be provided inside the cathode chamber 16 or inside the alkaline water tank 31.

Conductivity sensors can be used as the first conductivity measurement unit 70 and the second conductivity measurement unit 80. Furthermore, TDS (Total Dissolved Solids) sensors or pH sensors can be used as the first conductivity measurement unit 70 and the second conductivity measurement unit 80, as long as the conductivity can be calculated.

The first conductivity measurement unit 70 and the second conductivity measurement unit 80 are connected to a control unit 100 described below, and transmit the measured conductivity values of the anodic water and the cathodic water to the control unit 100.

The water treatment device 1 further includes an electrolytic power source 90 and the control unit 100. The electrolytic power source 90 is electrically connected to the anode 12 and the cathode 13. The electrolytic power source 90 causes a current to flow between the anode 12 and the cathode 13, and applies a voltage.

The control unit 100 is connected to the electrolytic power source 90 and adjusts the voltage between the anode and the cathode by controlling the electrolytic power source 90. The control unit 100 is also connected to the electromagnetic valve 41 of the water-to-be-treated flow path 40, the first electromagnetic valve 51, the second electromagnetic valve 61, and the water faucet 52, and controls opening and closing thereof. Furthermore, the control unit 100 is connected to the first circulation pump 22 and the second circulation pump 32, and controls operations thereof.

Note that, when executing operations based on a control program, the control unit 100 may include a storage device such as a ROM (Read Only Memory) and a RAM (Random Access Memory) that store the control program, and a CPU (Central Processing Unit) that executes the control program. Furthermore, when executing predetermined operations, the control unit 100 may include a dedicated electronic circuit or the like in which the control program is realized in hardware. Moreover, the control unit 100 may include a timekeeping unit such as an RTC (Real Time Clock) for measuring time.

When the water treatment device 1 having this configuration operates, the following premises apply. First, the conductivity of the acidic water is proportional to the ion concentration in the acidic water. Therefore, the conductivity of the acidic water is proportional to the concentration (hardness) of metal ions contained in the acidic water. Similarly, the conductivity of the alkaline water is proportional to the ion concentration in the alkaline water. Therefore, the conductivity of the alkaline water is proportional to the concentration (hardness) of metal ions contained in the alkaline water.

Next, when a voltage is applied to the anode 12 and the cathode 13, with water to be treated placed in the anode chamber 15 and the cathode chamber 16 of the electrolytic cell 10, as illustrated in Fig. 2, the metal ions in the anode chamber 15 pass through the ion-permeable membrane 14 and migrate to the cathode chamber 16. That is, as shown by the electrophoretic velocity equation of Formula 1, the electrophoretic velocity v (m/s) of an ion is expressed as the product of the ionic mobility µ (m²/Vs) and the electric field E (V/m). Therefore, the migration of metal ions is dependent on the magnitude of the voltage (electric field). Note that, as illustrated in Fig. 3, when a voltage is applied to the anode 12 and the cathode 13, hydrogen ions (H⁺) present in the anode chamber 15 also migrate to the cathode chamber 16 and react with hydroxide ions (OH⁻) to be neutralized. $v = μE$

Next, when the water to be treated placed in the anode chamber 15 and the cathode chamber 16 of the electrolytic cell 10 is subjected to electrolysis, as illustrated in Fig. 3 and shown by Chemical Formula 1, an oxidation reaction at the anode 12 generates hydrogen ions (H⁺), and a reduction reaction at the cathode 13 generates hydroxide ions (OH⁻). Note that electrolysis of water is dependent on the magnitude of the current.

[Chemical Formula 1] Anode 12: 2H₂O → 4H⁺ + 4e⁻ + O₂↑ Cathode 13: 4H₂O + 4e⁻ → 4OH⁻ + 2H₂↑

Magnesium ions (Mg²⁺) contained in the water to be treated react with the generated hydroxide ions to form magnesium hydroxide (Mg(OH)₂), becoming insolubilized. Here, the solubility product Kₛₚ of magnesium hydroxide in water at 25 °C is 1.80 × 10⁻¹¹ (mol/L)³. As shown in Formula 2, when the ion product of Mg²⁺ and OH⁻exceeds the solubility product Kₛₚ, the dissolution equilibrium shifts in the direction of forming Mg(OH)₂, thereby generating insoluble matter consisting of Mg(OH)₂. Therefore, in order to efficiently insolubilize magnesium ions, it is necessary to increase the pH, that is, to increase the hydroxide ions. ${K}_{sp} < \left[{Mg}^{2 +}\right] {\left[{OH}^{-}\right]}^{2}$

In addition, the water to be treated contains carbonate ions (CO₃²⁻) as a result of carbonates in minerals dissolving out, or carbon dioxide in the air dissolving. Calcium ions (Ca²⁺) contained in the water to be treated react with carbonate ions to form calcium carbonate (CaCO₃), becoming insolubilized. Here, the solubility product Kₛₚ of calcium carbonate in water at 25 °C is 4.96 × 10⁻⁹ (mol/L)². As shown in Formula 3, when the ion product of Ca²⁺ and CO₃⁻ exceeds the solubility product Kₛₚ, the dissolution equilibrium shifts in the direction of forming CaCO₃, thereby generating insoluble matter consisting of CaCO₃. ${K}_{sp} < \left[{Ca}^{2 +}\right] \left[{{CO}_{3}}^{-}\right]$

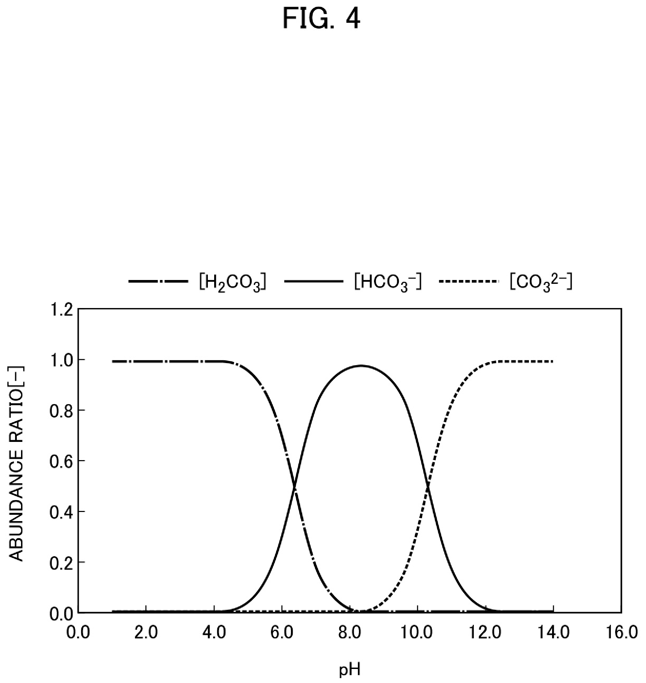

Here, Fig. 4 illustrates the relationship between the pH and the abundance ratios of carbonic acid (H₂CO₃), bicarbonate ions (HCO₃⁻), and carbonate ions (CO₃²⁻) when carbonate ions are dissolved in water. Fig. 4 shows that as the pH of the water becomes more alkaline, carbonic acid and bicarbonate ions decrease and carbonate ions increase. Therefore, in order to efficiently insolubilize calcium ions, it is necessary to increase the pH to increase the carbonate ions.

In this manner, the insolubilization of magnesium ions and calcium ions increases as the concentration of hydroxide ions increases. Furthermore, the electrolysis of water is dependent on the magnitude of the current. Therefore, the insolubilization of magnesium ions and calcium ions is dependent on the magnitude of the current.

Next, based on the premises described above, the operation of the water treatment device 1 according to the present embodiment will be described. First, the control unit 100 opens the electromagnetic valve 41 to inject the water to be treated, which is raw water, into the water-to-be-treated flow path 40, the first flow path 20, and the second flow path 30. Furthermore, the water to be treated is injected into the anode chamber 15 and the cathode chamber 16 of the electrolytic cell 10, as well as the acidic water tank 21 and the alkaline water tank 31.

Next, the control unit 100 measures the conductivities of the anodic water and the cathodic water by the first conductivity measurement unit 70 and the second conductivity measurement unit 80. Furthermore, the control unit 100 controls the electrolytic power source 90 to cause a current to flow between the anode 12 and the cathode 13, thereby electrolyzing the water to be treated. The control unit 100 also operates the first circulation pump 22 and the second circulation pump 32 to circulate the water to be treated in the first flow path 20 and the second flow path 30. By performing electrolysis and circulation of the water to be treated for a predetermined time, the water to be treated in the anode chamber 15, the first flow path 20, and the acidic water tank 21 becomes acidic water, and the water to be treated in the cathode chamber 16, the second flow path 30, and the alkaline water tank 31 becomes alkaline water.

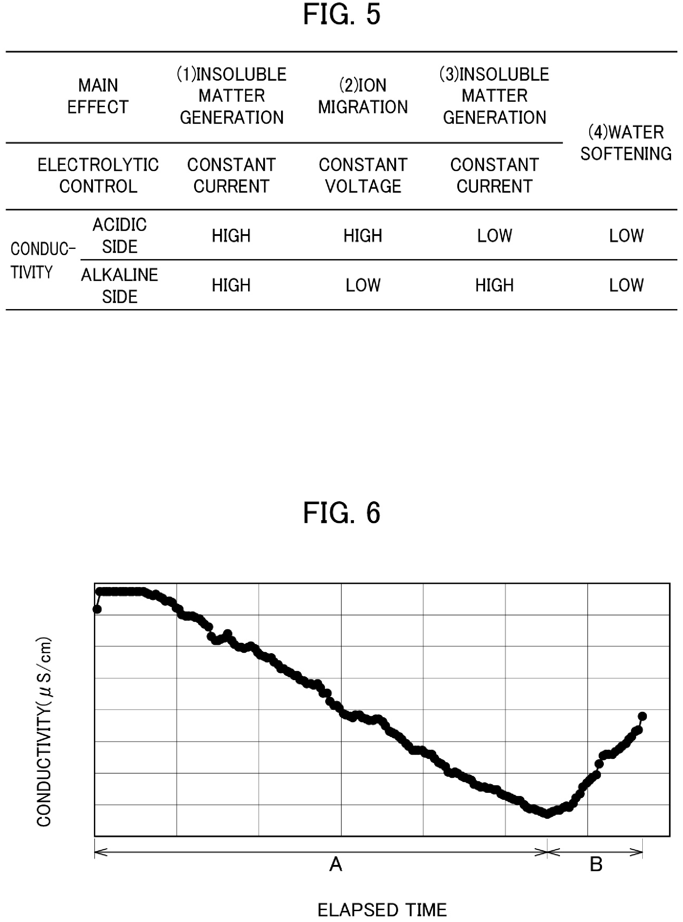

Then, the control unit 100 measures the conductivities of the anodic water (acidic water) and the cathodic water (alkaline water) at predetermined time intervals. Here, when the metal ions in the acidic water and the alkaline water have barely been removed, as shown in "(1) Insoluble matter generation" in Fig. 5, both the acidic water and the alkaline water are in a state of high conductivity. Therefore, the control unit 100 controls the electrolytic power source 90 to cause a constant current to flow between the anode 12 and the cathode 13. Note that constant-current control can be performed by adjusting the current or voltage applied between the anode 12 and the cathode 13.

As described above, since the insolubilization of metal ions is current-dependent, when constant-current control is performed, the insolubilization of metal ions in the alkaline water is promoted. As a result, the concentration of metal ions decreases, so that the conductivity of the alkaline water decreases. However, since insolubilization of metal ions is unlikely to occur in the acidic water, the conductivity is maintained at a high level.

Next, when, as a result of measuring the conductivity, the conductivity of the alkaline water has decreased, but the conductivity of the acidic water is maintained at a high level, as shown in "(2) Ion migration" in Fig. 5, the control unit 100 controls the electrolytic power source 90 to apply a constant voltage between the anode 12 and the cathode 13. Note that constant-voltage control can be performed by adjusting the voltage applied between the anode 12 and the cathode 13.

As described above, since the electrophoresis by which metal ions migrate from the anode chamber 15 to the cathode chamber 16 is voltage-dependent, when constant-voltage control is performed, the metal ions in the acidic water in the anode chamber 15 pass through the ion-permeable membrane 14, and migrate to the cathode chamber 16. As a result, the concentration of metal ions in the alkaline water in the cathode chamber 16 increases, so that the conductivity of the alkaline water rises. In contrast, the concentration of metal ions in the acidic water decreases, so that the conductivity of the acidic water decreases.

Here, as described above, when a constant voltage is applied to the anode 12 and the cathode 13, hydrogen ions (H⁺) present in the anode chamber 15 also migrate to the cathode chamber 16, causing a neutralization reaction and reducing the pH. When the pH of the alkaline water in the cathode chamber 16 decreases, the insolubilization of metal ions is mitigated. Therefore, when the control unit 100, as a result of measuring the conductivity after performing constant-current control, finds that the conductivity of the alkaline water has decreased but the conductivity of the acidic water is high, the control unit 100 calculates a voltage value that can maintain the pH of the alkaline water at a high level. For example, the control unit 100 calculates and applies a voltage value that can maintain the pH of the alkaline water at 11 or higher.

Next, when, as a result of measuring the conductivity, the conductivity of the alkaline water has risen but the conductivity of the acidic water has decreased, as shown in "(3) Ion migration" in Fig. 5, the control unit 100 controls the electrolytic power source 90 to cause a constant current to flow between the anode 12 and the cathode 13. Note that constant-current control can be performed by adjusting the current or voltage applied between the anode 12 and the cathode 13.

As described above, since the insolubilization of metal ions is current-dependent, when constant-current control is performed, the insolubilization of metal ions in the alkaline water is promoted. As a result, the concentration of metal ions decreases, so that the conductivity of the alkaline water decreases.

Next, when, as a result of measuring the conductivity, the conductivity of both the acidic water and the alkaline water has decreased, as shown in "(4) Water softening" in Fig. 5, the control unit 100 determines that water softening has progressed in both the acidic water and the alkaline water.

In this manner, the control unit 100 performs electrolytic control by, after measuring the conductivities of the anodic water and the cathodic water, adjusting the voltage applied between the anode 12 and the cathode 13, and repeating constant-current control and constant-voltage control. As a result, metal ions electrophorese from the acidic water side to the alkaline water side, and metal ions are insolubilized on the alkaline water side, thereby making it possible to reduce the metal ions in the water to be treated. Note that, in the present embodiment, since the time during which electrolytic control has been performed is measured by the timekeeping unit of the control unit 100, the electrolytic control is performed until a predetermined time has elapsed.

Thereafter, the control unit 100 adjusts the first electromagnetic valve 51 to cause the acidic water in the first flow path 20 to flow into the first outflow flow path 50. The control unit 100 also adjusts the second electromagnetic valve 61 to cause the alkaline water in the second flow path 30 to flow into the second outflow flow path 60. The alkaline water passes through the filter 62 provided in the second outflow flow path 60. Since the alkaline water that has been sent to the second outflow flow path 60 contains insoluble matter of metal ions, the insoluble matter is removed as the alkaline water passes through the filter 62. By opening the water faucet 52, the user can use the acidic water and alkaline water that have been subjected to the water-softening treatment. At this time, neutral treated water can be used by optionally mixing the acidic water and the alkaline water.

Note that Fig. 6 shows an example of changes in the conductivity of anodic water (acidic water) during electrolytic control, where constant-voltage control is performed during the time period denoted by symbol A, and constant-current control is performed during the time period denoted by symbol B. As shown in Fig. 6, during the constant-voltage control denoted by symbol A, the metal ions in the acidic water in the anode chamber 15 are passing through the ion-permeable membrane 14 and migrating to the cathode chamber 16, so that the concentration of metal ions in the acidic water decreases and the conductivity decreases. During the constant-current control denoted by symbol B, hydrogen ions that have been continuously generated since the time when constant-voltage control denoted by symbol A was being performed increase, and the hydrogen ions contribute to an increase in conductivity. Therefore, the control unit 100 may, for example, perform control to switch to constant-current control when the concentration of metal ions in the acidic water decreases due to constant-voltage control and the conductivity falls to a predetermined value or less.

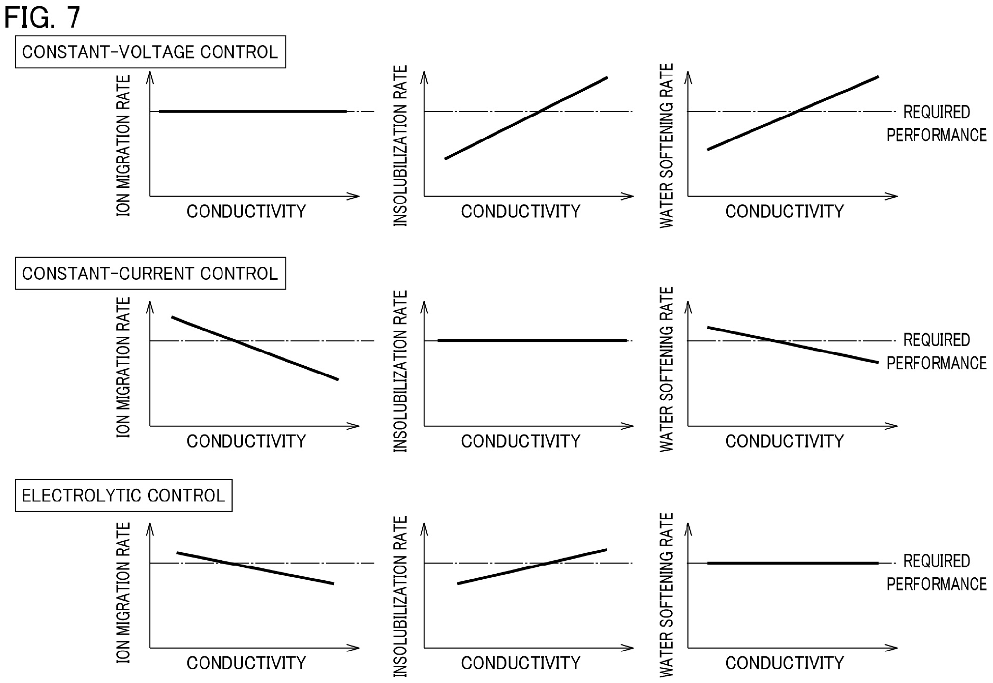

Here, Fig. 7 shows the relationship between the conductivity of the water to be treated and the ion migration rate of metal ions, insolubilization rate of metal ions, and water softening rate in the case where the control unit 100 performs only constant-voltage control, in which a constant voltage is applied to the anode 12 and the cathode 13 of the electrolytic cell 10 regardless of conductivity. Fig. 7 also shows the relationship between the conductivity of the water to be treated and the ion migration rate of metal ions, insolubilization rate of metal ions, and water softening rate in the case where the control unit 100 performs only constant-current control, in which a constant current is caused to flow through the anode 12 and the cathode 13 of the electrolytic cell 10 regardless of conductivity. The "ion migration rate of metal ions" indicates the efficiency with which metal ions migrate from the anode chamber 15 to the cathode chamber 16. The "insolubilization rate of metal ions" indicates the efficiency with which metal ions combine with hydroxide ions and carbonate ions to become insolubilized. The "water softening rate" indicates the efficiency with which metal ions are removed from the water to be treated.

As described above, since the migration of metal ions is dependent on the voltage (electric field), when the control unit 100 performs constant-voltage control, the metal ions migrate from the anode chamber 15 to the cathode chamber 16 regardless of the conductivity of the water to be treated, that is, the ion migration rate can be maintained at a high level. However, since the insolubilization of metal ions is dependent on the current, when constant-voltage control is performed, the insolubilization rate improves when the conductivity of the water to be treated is high, but the insolubilization rate decreases when the conductivity is low. Therefore, if the control unit 100 performs only constant-voltage control and does not perform constant-current control, the water softening could be performed efficiently and the water softening rate could be improved when the conductivity of the water to be treated is high, that is, when the concentration of metal ions is high. However, when the conductivity of the water to be treated is low, that is, when the concentration of metal ions is low, the insolubilization rate decreases, and thus the water softening rate also decreases. In this manner, in the case where the control unit 100 performs only constant-voltage control, the water softening rate is favorable when the concentration of metal ions is high, but the water softening rate deteriorates when the concentration of metal ions is low.

In contrast, since the insolubilization of metal ions is dependent on the current, when the control unit 100 performs constant-current control, the metal ions are insolubilized regardless of the conductivity of the water to be treated, that is, the insolubilization rate can be maintained at a high level. However, as described above, since the migration of metal ions is dependent on the voltage, when constant-current control is performed, the ion migration rate improves when the conductivity of the water to be treated is low, but the ion migration rate decreases when the conductivity is high. Therefore, if the control unit 100 performs only constant-current control and does not perform constant-voltage control, the water softening could be performed efficiently and the water softening rate could be improved when the conductivity of the water to be treated is low, that is, when the concentration of metal ions is low. However, when the conductivity of the water to be treated is high, that is, when the concentration of metal ions is high, the ion migration rate decreases, and thus the water softening rate also decreases. In this manner, when the control unit 100 performs only constant-current control, the water softening rate is favorable when the concentration of metal ions is low, but the water softening rate deteriorates when the concentration of metal ions is high.

In the water treatment device 1 according to the present embodiment, electrolytic control is performed by adjusting the voltage applied between the anode 12 and the cathode 13 in accordance with the conductivity (hardness) of the anodic water and the cathodic water, and repeating constant-current control and constant-voltage control. Therefore, it becomes possible to maintain both the ion migration rate and the insolubilization rate at a high level at all times, and as a result, to obtain a desired water softening rate regardless of the conductivity.

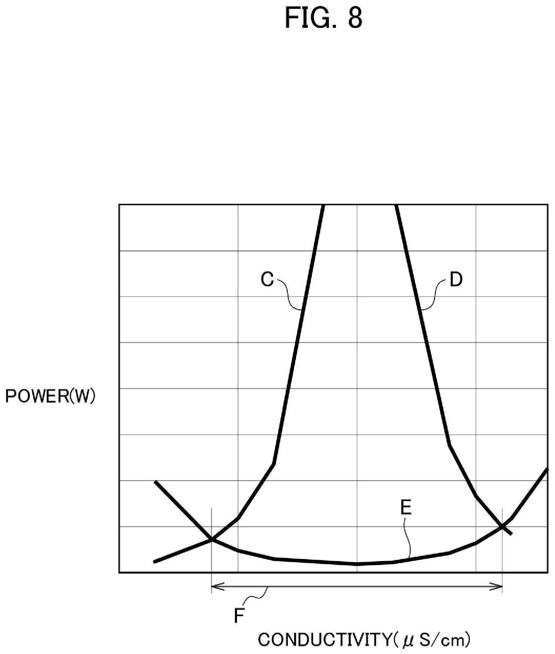

Here, Fig. 8 shows an example of the relationship between the conductivity of the water to be treated and the power consumption when constant-voltage control, constant-current control, and electrolytic control are performed. Note that symbol C in Fig. 8 shows the relationship between the conductivity and power consumption when only constant-voltage control is performed, and symbol D shows the relationship between the conductivity and power consumption when only constant-current control is performed. Symbol E shows the relationship between the conductivity and power consumption when the electrolytic control according to the present embodiment is performed. From Fig. 8, it can be seen that in the case of constant-voltage control only, the power consumption increases as the conductivity of the water to be treated increases. It can also be seen that in the case of constant-current control only, the power consumption increases as the conductivity of the water to be treated decreases. However, since the electrolytic control in the present embodiment switches between constant-current control and constant-voltage control in accordance with the conductivity of the water to be treated, the power consumption can be kept low, as shown by symbol E.

Note that, in the present embodiment, it is preferable that the range of conductivity of the water to be treated during electrolytic control is a range in which the power consumption is lower than in the case of constant-current control only and constant-voltage control only. That is, it is preferable that the range of conductivity of the water to be treated (acidic water and alkaline water) during electrolytic control is within the range of symbol F shown in Fig. 8, and specifically, it is preferable that the conductivity is from 30 to 8000 µS/cm. This makes it possible to reduce the power consumption as compared with the cases of constant-current control only and constant-voltage control only.

In addition, in the water treatment device 1 according to the present embodiment, the first flow path 20 and the second flow path 30 are circulating-type flow paths. However, the water treatment device is not limited to this embodiment, and one-pass type flow paths that do not circulate water may be used as the first flow path and the second flow path. Furthermore, a combination of a circulating-type flow path and a one-pass type flow path may be used as the first flow path and the second flow path. Therefore, in the present specification, the circulating-type flow path and the one-pass type flow path are collectively referred to as the "first flow path." Similarly, the circulating-type flow path and the one-pass type flow path are collectively referred to as the "second flow path."

### (Supplementary Notes)

The following technical features are disclosed by the description of the embodiments above.
(Technical Feature 1) A water treatment device for producing treated water by removing metal ions from water to be treated, the water treatment device including:
an electrolytic cell that includes an anode chamber provided with an anode, a cathode chamber provided with a cathode, and an ion-permeable membrane that partitions the anode chamber and the cathode chamber and allows ions to pass therethrough, and that is configured to generate acidic water and alkaline water from the water to be treated by electrolysis;
a first conductivity measurement unit that measures a conductivity of water flowing through the anode chamber;
a second conductivity measurement unit that measures a conductivity of water flowing through the cathode chamber; and
a control unit that controls a voltage or current between the anode and the cathode, wherein
the acidic water flows through the anode chamber, and the alkaline water flows through the cathode chamber, and
the control unit varies the voltage or current applied between the anode and the cathode based on the conductivity of water measured by the first conductivity measurement unit and the conductivity of water measured by the second conductivity measurement unit.

In the water treatment device according to the present embodiment, the conductivity of the anodic water, which is water flowing through the anode chamber, and the conductivity of the cathodic water, which is water flowing through the cathode chamber, are measured, and based on the results, the voltage or current applied between the anode and the cathode is varied. Therefore, the insolubilization of metal ions and the migration of metal ions from the anode chamber to the cathode chamber are controlled in accordance with the conductivities of the anodic water and the cathodic water, so that it becomes possible to efficiently remove metal ions without using an ion exchange resin.
(Technical Feature 2) The water treatment device according to Technical Feature 1, wherein, when the conductivity of water flowing through the anode chamber and the conductivity of water flowing through the cathode chamber are from 30 to 8000 µS/cm, the voltage applied between the anode and the cathode varies.

In the present embodiment, it is preferable that the range of conductivity of the water to be treated during electrolytic control is a range in which the power consumption is lower than in cases of constant-current control only and constant-voltage control only. This configuration makes it possible to reduce the power consumption as compared with cases of constant-current control only and constant-voltage control only.
(Technical Feature 3) The water treatment device according to Technical Feature 1 or 2, further comprising:
a first flow path connected to the anode chamber and through which the acidic water flows; and
a second flow path connected to the cathode chamber and through which the alkaline water flows,
wherein the first conductivity measurement unit is provided on an inlet side of the anode chamber in the first flow path, and the second conductivity measurement unit is provided on an inlet side of the cathode chamber in the second flow path.

With this configuration, it is possible to measure the conductivities of the anodic water (acidic water) and the cathodic water (alkaline water) before entering the electrolytic cell, thereby enabling the electrolytic control in the electrolytic cell to be performed with high accuracy.
(Technical Feature 4) The water treatment device according to any one of Technical Features 1 to 3, wherein the control unit switches from one of constant-current control and constant-voltage control to the other by varying the voltage or current applied between the anode and the cathode.

With this configuration, it is possible to promote the insolubilization of metal ions in the water to be treated while reducing power consumption as compared with the cases of constant-current control only and constant-voltage control only.
(Technical Feature 5) The water treatment device according to Technical Feature 4, wherein
when the control unit performs the constant-current control, the metal ions are insolubilized, and
when the control unit performs the constant-voltage control, the metal ions migrate from the anode chamber to the cathode chamber.

By repeating constant-voltage control and constant-current control, migration of metal ions from the anode chamber to the cathode chamber and insolubilization of metal ions in the cathode chamber are alternately performed, thereby making it possible to efficiently soften the water to be treated.

While the present embodiment has been described above, the present embodiment is not limited thereto, and various modifications are possible within the scope of the gist of the present embodiment.

The entire content of Japanese Patent Application No. 2023-195801 (filing date: November 17, 2023) is incorporated herein by reference.

### INDUSTRIAL APPLICABILITY

According to the present disclosure, it is possible to provide a water treatment device capable of efficiently removing metal ions from water to be treated without using an ion exchange resin.

### REFERENCE SIGNS LIST

- 1: Water treatment device
- 10: Electrolytic cell
- 12: Anode
- 13: Cathode
- 14: Ion-permeable membrane
- 15: Anode chamber
- 16: Cathode chamber
- 20: First flow path
- 30: Second flow path
- 70: First conductivity measurement unit
- 80: Second conductivity measurement unit
- 100: Control unit

## Claims

1. A water treatment device for producing treated water by removing metal ions from water to be treated, the water treatment device comprising:
an electrolytic cell that includes an anode chamber provided with an anode, a cathode chamber provided with a cathode, and an ion-permeable membrane that partitions the anode chamber and the cathode chamber and allows ions to pass therethrough, and that is configured to generate acidic water and alkaline water from the water to be treated by electrolysis;
a first conductivity measurement unit that measures a conductivity of water flowing through the anode chamber;
a second conductivity measurement unit that measures a conductivity of water flowing through the cathode chamber; and
a control unit that controls a voltage or current between the anode and the cathode, wherein
the acidic water flows through the anode chamber, and the alkaline water flows through the cathode chamber, and
the control unit varies the voltage or current applied between the anode and the cathode based on the conductivity of water measured by the first conductivity measurement unit and the conductivity of water measured by the second conductivity measurement unit.

2. The water treatment device according to claim 1, wherein, when the conductivity of water flowing through the anode chamber and the conductivity of water flowing through the cathode chamber are from 30 to 8000 µS/cm, the voltage applied between the anode and the cathode is varied.

3. The water treatment device according to claim 1 or 2, further comprising:
a first flow path connected to the anode chamber and through which the acidic water flows; and
a second flow path connected to the cathode chamber and through which the alkaline water flows,
wherein the first conductivity measurement unit is provided on an inlet side of the anode chamber in the first flow path, and the second conductivity measurement unit is provided on an inlet side of the cathode chamber in the second flow path.

4. The water treatment device according to any one of claims 1 to 3, wherein the control unit switches from one of constant-current control and constant-voltage control to the other by varying the voltage or current applied between the anode and the cathode.

5. The water treatment device according to claim 4, wherein
when the control unit performs the constant-current control, the metal ions are insolubilized, and
when the control unit performs the constant-voltage control, the metal ions migrate from the anode chamber to the cathode chamber.
